# EUROPÄISCHE PATENTANMELDUNG

(11) **EP 1 241 748 A2**
(43) Veröffentlichungstag der Anmeldung: **18.09.2002**
(21) Anmeldenummer: 02100149.0
(22) Anmeldetag: 19.02.2002
(51) Int. Cl.: H01S 3/30, H01S 3/094

(54) **Multiplexer zur Realisierung von nicht-äquidistanten Abständen zwischen den Pumpwellenlängen in Breitband Raman Verstärkern**

(30) Priorität: 13.03.2001 DE 10111969
(71) Anmelder: SIEMENS AKTIENGESELLSCHAFT, 80333 München (DE)
(72) Erfinder: Eder, Christian, 81373, München (DE); Gaubatz, Ulrich, Dr., 85757, Karlsfeld (DE); Genter, Guido, 81673, München (DE); Krummrich, Peter, 81379, München (DE); Neuhauser, Richard, 85375, Neufahrn (DE)

(57) **Zusammenfassung**

Die Erfindung betrifft ein Verfahren zur Erzeugung von nicht-äquidistanten Pumpwellen zur Raman-Verstärkung eines über einen Lichtwellenleiter 4 geführten Signals. Außerdem betrifft die Erfindung eine Pumpwellenerzeugungsvorrichtung 5 zur Erzeugung von Pumpwellen zur Raman-Verstärkung eines über einen Lichtwellenleiter 4 geführten Signals, welche mindestens eine Pumpquelle aufweist, und die so eingerichtet ist, dass sie Pumpwellen mit einer ersten, zweiten, dritten und vierten, zueinander äquidistanten Pumpwellenlänge erzeugen kann, mit einer Steuereinrichtung 5a, die so eingerichtet ist, dass sie jeweils bei der ersten, zweiten und vierten Pumpwellenlänge die Erzeugung einer Pumpwelle u, v, w veranlasst, wobei die Steuereinrichtung 5a so eingerichtet ist, dass bei der dritten Pumpwellenlänge keine Pumpwelle erzeugt wird, so dass insgesamt ein nichtäquidistantes Pumpkanalraster erzielt wird.

## Beschreibung

Die Erfindung betrifft ein Verfahren zur Erzeugung von Pumpwellen zur Raman-Verstärkung eines über einen Lichtwellenleiter geführten Signals gemäß Oberbegriff des Anspruchs 1, sowie eine Pumpwellenerzeugungsvorrichtung gemäß Oberbegriff des Anspruchs 6.

Wird ein optisches WDM-Signal ("WDM" = wavelength division multiplex bzw. Wellenlängen-Multiplex) über einen Lichtwellenleiter übertragen, kommt es aufgrund der dämpfenden Eigenschaften des Lichtwellenleiters zu einer Signalabschwächung. Das übertragene Signal muß deshalb nach bestimmten Lichtwellenleiterabschnitten verstärkt werden.

Eine Möglichkeit zur Signalverstärkung beruht auf der Nutzung der stimulierten Raman-Streuung. Hierbei wird ein Pumpsignal in den Lichtwellenleiter eingespeist. Das Pumpsignal wird mit Hilfe mehrerer Pumpquellen, z.B. mehreren Laserdioden, erzeugt. Dabei wird der Wellenlängensatz der Pumpquellen so gewählt, daß - unter Berücksichtigung des Raman-Gewinn-Spektrums - alle Kanäle des WDM-Signals gleich verstärkt werden (s. "Fiber Optic Communication Systems", G.P. Agrawal, 2. Ausgabe, Seite 381, Fig. 8.11). Beispielsweise wird ein Kanal bei einer Frequenzdifferenz von 13,2 THz zu einer Pumpfrequenz maximal, und bei einer kleineren oder größeren Frequenzdifferenz weniger stark verstärkt. Durch Verwendung einer größeren Anzahl von unterschiedlichen Pumpwellenlängen kann eine relativ homogene Verstärkung der Kanäle des WDM-Übertragungssignals erreicht werden.

Zum Multiplexen der unterschiedlichen Pumpwellenlängen können periodische Filter, z.B. Mach-Zehnder-Interferometer verwendet werden. Mit Mach-Zehnder-Interferometern ist es möglich, Pumpsignale relativ hoher Summenleistung, z.B. bis 2 W, zusammenzumultiplexen und in den Lichtwellenleiter einzukoppeln. Allerdings können bei den im Stand der Technik bekannten Verfahren mit herkömmlichen Mach-Zehnder-Interferometern nur Pumpwellenlängenraster mit zueinander äquidistanten Pumpwellenlängen realisiert werden (vgl. z.B. die Veröffentlichung "Namiki et al., Proc. OAA 2000, Quebec, OMB 2, 7-9").

Bei Verwendung von äquidistanten Pumpwellenlängen tritt - insbesondere bei Fasertypen mit niedriger Dispersion bei den verwendeten Pumpwellenlängen - zwischen den Pumpwellen der Effekt der sog. Vierwellenmischung ("FWM" = Four Wave Mixing) auf. Durch die Vierwellenmischung werden neue Frequenzkomponenten, sog. Mischprodukte, bei Summen oder Differenzen von Pumpfrequenzen erzeugt, die sich im oder ausserhalb des Spektrums der Pumpstrahlung überlagern.

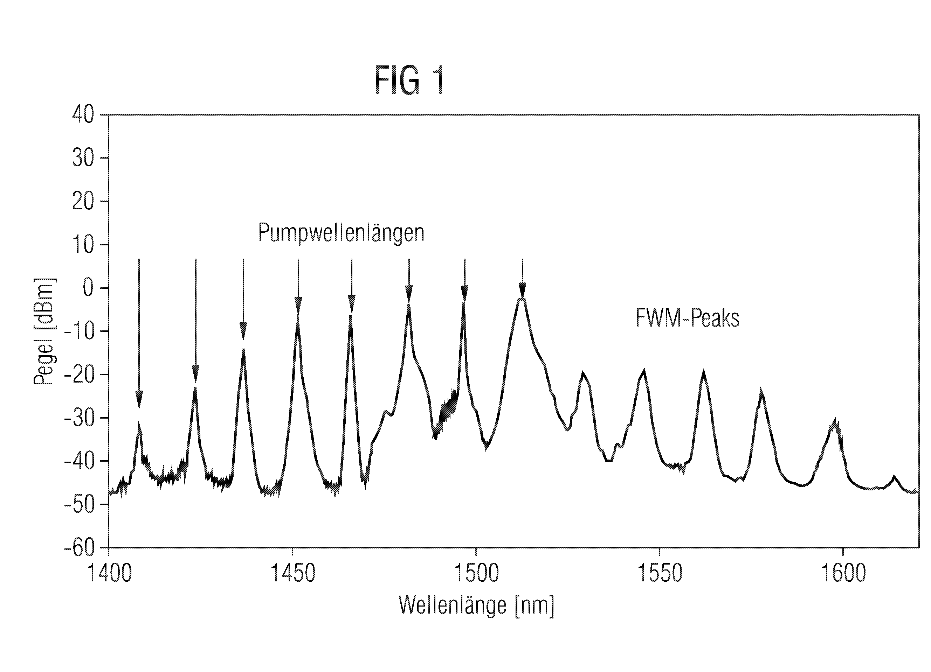

Falls die höheren Pumpwellenlängen nahe bei den niedrigeren WDM-Signalwellenlängen liegen, kann es zu einer Überlagerung der Mischprodukte mit den Kanälen im WDM-Signalspektrum kommen. Fig. 1 zeigt ein Beispiel eines Signalspektrums, welches bei der Verwendung von 8 Pumpwellen mit äquidistanten Pumpwellenlängenabständen auftreten kann. Wie in Fig. 1 dargestellt ist, liegen die sich ergebenden Vierwellenmischprodukte FWM im Wellenlängenbereich eines WDM-Signals (hier: 1525-1605 nm).

Durch die auftretende Vierwellenmischung wird hierbei der optische Signal-Rauschabstand OSNR, und damit die Signalqualität bestimmter Kanäle des WDM-Signals verschlechtert. Aufgrund der Überlagerung von Mischprodukten im Signalspektrum kann es zu OSNR-Unterschieden von ca. 8 dB kommen.

Der beschriebene Effekt tritt besonders stark bei einer Breitband-Raman-Verstärkung im C- und L-Band (zwischen ca. 1525 nm und 1610 nm) auf, da für eine Verstärkung im L-Band die Pumpwellenlängen nahe an das C-Band heranreichen müssen. Somit entstehen im C-Band zu relativ starke Mischprodukte, die sich dem Signalspektrum überlagern. Besonders ausgeprägt ist der Effekt dabei für Fasern, deren Dispersionsnullstelle nahe bei der Wellenlänge der Pumpen mit hoher Wellenlänge liegt (ca. 1500 nm).

In "Agrawal, Nonlinear Fiber Optics, 1995, p. 404" sind die physikalischen Effekte beschrieben, die zu einer Vierwellenmischung führen. Grundsätzlich kann zwischen degenerierter und nicht-degenerierter Vierwellenmischung unterschieden werden. Nicht-degenerierte Vierwellenmischung basiert auf der Wechselwirkung von Photonen mit drei verschiedenen Wellenlängen, wobei Photonen mit einer vierten Wellenlänge erzeugt werden. Demgegenüber geht bei der degenerierten Vierwellenmischung eine Wellenlänge quasi doppelt in den Mischprozess ein, so dass degenerierte Vierwellenmischung bereits bei Photonen mit zwei verschiedenen Wellenlängen erfolgen kann.

Es ist vorgeschlagen worden, zum Multiplexen von Pumpwellen statt Mach-Zehnder-Interferometern sog. Interferenzfilter zu verwenden (s. z.B. die o.g. Veröffentlichung "Namiki et al., Proc. OAA 2000, Quebec, OMB 2, 7-9"). Mit diesen können nicht-äquidistante Abstände der Pumpwellenlängen realisiert werden. In der Verröffentlichung "Kidorf et al., IEEE Phot. Technol. Lett., 11 (1999), 530-532" ist eine nicht-äquidistante Pumpwellenlängenverteilung beschrieben, bei der bei kleineren Pumpwellenlängen relativ mehr, und bei höheren Pumpwellenlängen relativ weniger Pumpwellen verschiedener Wellenlänge vorgesehen sind. Dadurch kann ein Leistungstranfer von kleinen zu höheren Pumpwellenlängen entlang des Lichtwellenleiters ausgeglichen, und das Auftreten von Vierwellen-Mischprodukten verringert werden. Allerdings ist die durch Interferenzfilter in den Lichtwellenleiter einkoppelbare Leistung relativ klein.

Die Erfindung hat zur Aufgabe, ein neuartiges Verfahren zur Erzeugung von Pumpwellen, sowie eine neuartige Pumpwellenerzeugungsvorrichtung zur Verfügung zu stellen.

Sie erreicht dieses und weitere Ziele durch ein Verfahren zur Erzeugung von Pumpwellen zur Raman-Verstärkung eines über einen Lichtwellenleiter geführten Signals, welches die folgenden Schritte aufweist:
- Bereitstellen einer Pumpwellenerzeugungsvorrichtung mit mindestens einer Pumpquelle, die so eingerichtet ist, dass sie Pumpwellen mit einer ersten, zweiten, dritten und vierten, zueinander äquidistanten Pumpwellenlänge erzeugen kann;
- Ansteuern der Pumpwellenerzeugungsvorrichtung derart, dass jeweils bei der ersten, zweiten und vierten Pumpwellenlänge eine Pumpwelle erzeugt wird, und dass bei der dritten Pumpwellenlänge keine Pumpwelle erzeugt wird, so dass insgesamt ein nicht-äquidistantes Pumpkanalraster erzielt wird.

Vorteilhafte Weiterbildungen der Erfindung sind in den Unteransprüchen angegeben.

Gemäß einem Grundgedanken der Erfindung wird als Pumpwellenerzeugungsvorrichtung ein Mach-Zehnder-Interferometer verwendet, welches mehr Eingänge aufweist, als zu multiplexende Pumpkanäle (z.B. ein Mach-Zehnder-Interferometer mit 12 Eingängen bei 7 oder 8 Pumpwellenlängen) vorliegen. Ein nicht-äquidistantes Pumpkanalraster kann dann dadurch erreicht werden, dass die nicht-belegten Eingänge entsprechend unregelmäßig verteilt gewählt werden. Hierdurch wird der Einfluß der Vierwellenmischung verringert, und damit der optische Signal-Rauschabstand OSNR erhöht. Gleichzeitig können wegen der Verwendung eines Mach-Zehnder-Interferometers in den Lichtwellenleiter relativ hohe Pumpleistungen eingekoppelt werden.

Besonders vorteilhaft wird bei Pumpwellen höherer Wellenlänge ein nicht-äquidistantes, und bei Pumpwellen niedriger Wellenlänge ein äquidistantes Pumpkanalraster verwendet. Bei kleineren Pumpwellenlängen kommt es nämlich durch höhere lokale Dispersion schnell zu einem Auseinanderlaufen der Phasenbeziehungen, und damit zu verringerter Vierwellenmischung.

Vorrichtungsgemäß erreicht die Erfindung das o.g. und weitere Ziele dadurch, dass eine Pumpwellenerzeugungsvorrichtung zur Erzeugung von Pumpwellen zur Raman-Verstärkung eines über einen Lichtwellenleiter geführten Signals zur Verfügung gestellt wird, welche mindestens eine Pumpquelle aufweist, und die so eingerichtet ist, dass sie Pumpwellen mit einer ersten, zweiten, dritten und vierten, zueinander äquidistanten Pumpwellenlänge erzeugen kann, mit einer Steuereinrichtung, die so eingerichtet ist, daß sie jeweils bei der ersten, zweiten und vierten Pumpwellenlänge die Erzeugung einer Pumpwelle veranlaßt, wobei die Steuereinrichtung so eingerichtet ist, dass bei der dritten Pumpwellenlänge keine Pumpwelle erzeugt wird, so dass insgesamt ein nicht-äquidistantes Pumpkanalraster erzielt wird.

Im folgenden wird die Erfindung anhand mehrerer Ausführungsbeispiele und der beigefügten Zeichnung näher erläutert. In der Zeichnung zeigt:
Figur 1 ein Signalspektrum bei Verwendung von 8 Pumpwellen mit äquidistanten Pumpwellenlängenabständen;
Figur 2 eine schematische Darstellung einer optischen Nachrichtenübertragungsstrecke;
Figur 3 eine schematische Darstellung der Belegung der Eingänge eines Mach-Zehnder-Interferometers gemäß einem ersten Ausführungsbeispiel der vorliegenden Erfindung;
Figur 4 eine schematische Darstellung der Belegung der Eingänge eines Mach-Zehnder-Interferometers gemäß einem zweiten Ausführungsbeispiel der vorliegenden Erfindung; und
Figur 5 nicht-äquidistante Pumpwellen, die von dem in Fig. 3 gezeigten Mach-Zehnder-Interferometer erzeugt werden.

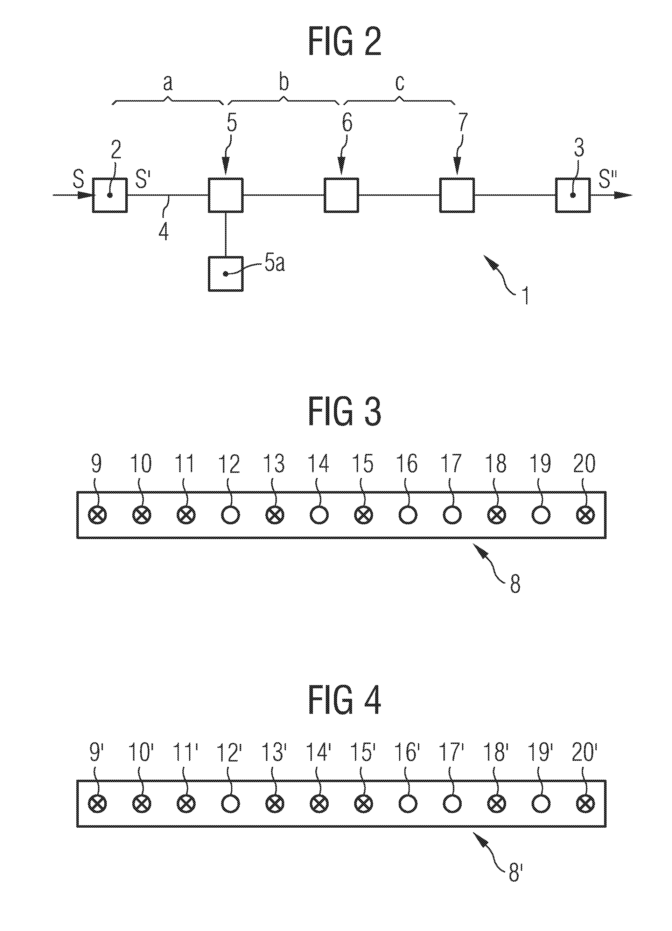

Fig. 2 zeigt eine schematische Darstellung einer optischen Nachrichtenübertragungsstrecke 1. Diese weist eine Sendeeinrichtung 2, eine Empfangseinrichtung 3, einen Lichtwellenleiter 4, sowie mehrere Verstärkungseinrichtungen 5, 6, 7 auf.

In der Sendeeinrichtung 2 wird mit Hilfe von Laserdioden ein empfangenes elektrisches Signal S in ein optisches WDM-Signal S' umgewandelt ("WDM" = wavelength division multiplex bzw. Wellenlängen-Multiplex). Das WDM-Signal S' wird in den Lichtwellenleiter 4 eingebracht, und zur Empfangseinrichtung 3 übertragen. Dort wird das WDM-Signal S' mit Hilfe von Halbleiterdioden in ein elektrisches Signal S'' zurückgewandelt.

Aufgrund der dämpfenden Eigenschaften des Lichtwellenleiters 4 wird das WDM-Signal S' im Verlauf der Übertragung von der Sendeeinrichtung 2 zur Empfangseinrichtung 3 abgeschwächt. Deshalb wird das WDM-Signal S' - beruhend auf stimulierter Raman-Streuung - nach einem ersten Lichtwellenleiterabschnitt a von der Verstärkungseinrichtung 5, und nach weiteren Lichtwellenleiterabschnitten b, c von den Verstärkungseinrichtungen 6, 7 verstärkt.

Hierzu weist jede Verstärkungseinrichtung 5, 6, 7 ein Mach-Zehnder-Interferometer 8 auf. Jedes Mach-Zehnder-Interferometer 8 speist in den Lichtwellenleiter 4 Pumpwellen mit mehreren (z.B. sieben) verschiedenen Pumpwellenlängen ein. Die Pumpwellen werden mit Hilfe von Pumpquellen, hier: mit Laserdioden, erzeugt. Für jede Verstärkungseinrichtung 5, 6, 7 ist der Wellenlängensatz der Pumpquellen so gewählt, daß - unter Berücksichtigung des Raman-Gewinn-Spektrums - alle Kanäle des WDM-Signals S' relativ homogen verstärkt werden.

Wie in Fig. 3 gezeigt ist, weist das Mach-Zehnder-Interferometer 8 insgesamt zwölf Eingänge 9, 10, 11, 12, 13, 14, 15, 16, 17, 18, 19, 20 auf, kann also durch Anlegen entsprechender Steuersignale an den Interferometereingängen 9, 10, 11, 12, 13, 14, 15, 16, 17, 18, 19, 20 Pumpwellen mit zwölf verschiedenen Pumpwellenlängen erzeugen.

Beispielsweise wird, wenn ein entsprechendes Steuersignal an den ersten Interferometereingang 9 angelegt wird, vom Interferometer 8 eine Pumpwelle mit einer Wellenlänge von 1420 nm erzeugt. Auf entsprechende Weise kann durch Anlegen eines Steuersignals am zweiten Eingang 10 eine Pumpwelle mit einer Wellenlänge von 1428 nm erzeugt werden, und durch Anlegen eines Steuersignals am dritten Eingang 11 eine Pumpwelle mit einer Wellenlänge von 1436 nm, usw.

Die genaue Zuordnung zwischen den Eingängen 9, 10, 11, 12, 13, 14, 15, 16, 17, 18, 19, 20 und den Wellenlängen der bei der Ansteuerung des jeweiligen Eingangs 9, 10, 11, 12, 13, 14, 15, 16, 17, 18, 19, 20 erzeugten Pumpwelle ist in der folgenden Tabelle A dargestellt:

**Tabelle A**

| Eingang | Pumpwellenlänge |
|---|---|
| 9 | 1420 nm |
| 10 | 1428 nm |
| 11 | 1436 nm |
| 12 | 1444 nm |
| 13 | 1452 nm |
| 14 | 1460 nm |
| 15 | 1468 nm |
| 16 | 1476 nm |
| 17 | 1484 nm |
| 18 | 1492 nm |
| 19 | 1500 nm |
| 20 | 1508 nm |

Wie in Tabelle A gezeigt ist, weisen die Wellenlängen der von dem Mach-Zehnder-Interferometer 8 erzeugbaren Pumpwellen jeweils einen Wellenlängenabstand von 8 nm auf.

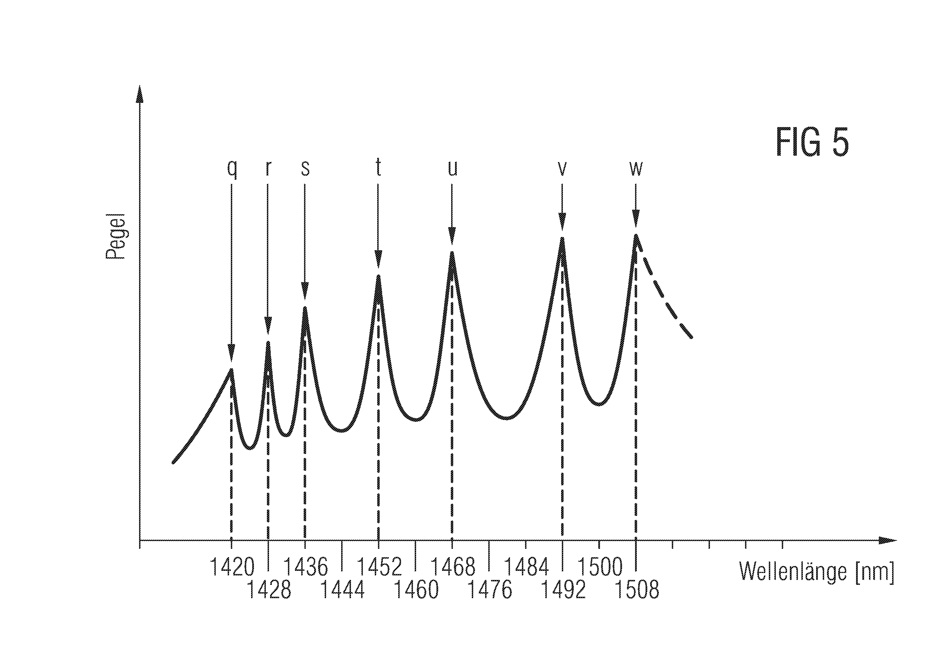

Die Ansteuerung des jeweils gewünschten Eingangs 9, 10, 11, 12, 13, 14, 15, 16, 17, 18, 19, 20 erfolgt - wieder bezogen auf Fig. 2 - durch eine in der jeweiligen Verstärkungseinrichtung 5, 6, 7 enthaltenen Steuereinrichtung 5a. Wie in Fig. 3 gezeigt ist, werden bei dem bei einem ersten Ausführungsbeispiel der Erfindung verwendeten Interferometer 8 der erste, zweite, dritte, fünfte, siebte, zehnte und zwölfte Eingang 9, 10, 11, 13, 15, 18, 20 angesteuert, so dass gemäß Fig. 5 Pumpwellen q, r, s, t, u, v, w mit sieben verschiedenen Pumpwellenlängen (1420 nm, 1428 nm, 1436 nm, 1452 nm, 1468 nm, 1492 nm und 1508 nm) erzeugt werden.

Dadurch, dass das Mach-Zehnder-Interferometer 8 mehr Eingänge 9, 10, 11, 12, 13, 14, 15, 16, 17, 18, 19, 20 aufweist, als zu multiplexende Pumpwellen q, r, s, t, u, v, w kann insgesamt ein nicht-äquidistantes Pumpkanalraster erzielt werden.

Beim vorliegenden Ausführungsbeispiel sind die vom Mach-Zehnder-Interferometer 8 erzeugten drei Pumpwellen q, r, s niedrigster Wellenlänge (also die Pumpwellen mit einer Wellenlänge von 1420 nm, 1428 nm und 1436 nm) äquidistant zueinander. Bei kleineren Pumpwellenlängen kommt es nämlich durch hohe lokale Dispersion schnell zu einem Auseinanderlaufen der Phasenbeziehungen, und damit zu verringerter Vierwellenmischung.

Die Wellenlänge der Pumpwellen v, w mit den zwei höchsten Wellenlängen (also die Pumpwellen mit einer Wellenlänge von 1492 nm und 1508 nm) sind so gewählt, dass ein durch degenerierte Vierwellenmischung von diesen hervorgerufenes Mischprodukt eine Wellenlänge aufweist, die in die Lücke zwischen der höchsten Pumpwellenlänge (hier: 1508 nm), und der niedrigsten Signalwellenlänge (hier: 1530 nm) fällt.

In Figur 4 ist eine schematische Darstellung der Belegung der Eingänge eines bei einem zweiten Ausführungsbeispiel der vorliegenden Erfindung verwendeten Mach-Zehnder-Interferometers 8' gezeigt. Bei diesem Ausführungsbeispiel wird der erste, zweite, dritte, fünfte, sechste, siebte, zehnte und zwölfte Eingang 9', 10', 11', 13', 14', 15', 18', 20' angesteuert, so dass Pumpwellen mit acht statt mit sieben verschiedenen Pumpwellenlängen (1420 nm, 1428 nm, 1436 nm, 1452 nm, 1460 nm, 1468 nm, 1492 nm und 1508 nm) erzeugt werden.

Wiederum sind die vom Mach-Zehnder-Interferometer 8' erzeugten Pumpwellen so gewählt, dass die Pumpwellen niedrigerer Wellenlänge (hier die Pumpwellen mit einer Wellenlänge von 1420 nm, 1428 nm, 1436 nm bzw. 1452 nm, 1460 nm, 1468 nm) äquidistant, und die Pumpwellen höherer Wellenlänge (hier die Pumpwellen mit einer Wellenlänge von 1492 nm und 1508 nm) nicht äquidistant zueinander sind.

Durch die Verwendung von Mach-Zehnder-Interferometern 8 bzw. 8' ist sichergestellt, dass relativ hohe Pumpleistungen in den Lichtwellenleiter 4 eingekoppelt werden. Da die Pumpwellen q, r, s, t, u, v, w ein nicht-äquidistantes Pumpkanalraster aufweisen, wird zudem die Vierwellenmischung verringert, und dadurch der optische Signal-Rauschabstand OSNR erhöht.

### Bezugszeichenliste

- 1: Nachrichtenübertragungsstrecke
- 2: Sendeeinrichtung
- 3: Empfangseinrichtung
- 4: Lichtwellenleiter
- 5: Verstärkungseinrichtung
- 5a: Steuereinrichtung
- 6: Verstärkungseinrichtung
- 7: Verstärkungseinrichtung
- 8: Mach-Zehnder-Interferometer
- 8': Mach-Zehnder-Interferometer
- 9: Interferometer-Eingang
- 9': Interferometer-Eingang
- 10: Interferometer-Eingang
- 10': Interferometer-Eingang
- 11: Interferometer-Eingang
- 11': Interferometer-Eingang
- 12: Interferometer-Eingang
- 12': Interferometer-Eingang
- 13: Interferometer-Eingang
- 13': Interferometer-Eingang
- 14: Interferometer-Eingang
- 14': Interferometer-Eingang
- 15: Interferometer-Eingang
- 15': Interferometer-Eingang
- 16: Interferometer-Eingang
- 16': Interferometer-Eingang
- 17: Interferometer-Eingang
- 17': Interferometer-Eingang
- 18: Interferometer-Eingang
- 18': Interferometer-Eingang
- 19: Interferometer-Eingang
- 20: Interferometer-Eingang
- 20': Interferometer-Eingang

## Patentansprüche

1. Verfahren zur Erzeugung von Pumpwellen zur Raman-Verstärkung eines über einen Lichtwellenleiter (4) geführten Signals, welches die folgenden Schritte aufweist:
- Bereitstellen einer Pumpwellenerzeugungsvorrichtung (5) mit mindestens einer Pumpquelle, die so eingerichtet ist, dass sie Pumpwellen mit einer ersten, zweiten, dritten und vierten, zueinander äquidistanten Pumpwellenlänge erzeugen kann;
- Ansteuern der Pumpwellenerzeugungsvorrichtung (5) derart, dass jeweils bei der ersten, zweiten und vierten Pumpwellenlänge eine Pumpwelle (u, v, w) erzeugt wird,
**dadurch gekennzeichnet,**
**dass** die Pumpwellenerzeugungsvorrichtung (5) so angesteuert wird, dass bei der dritten Pumpwellenlänge keine Pumpwelle erzeugt wird, so dass insgesamt ein nicht-äquidistantes Pumpkanalraster erzielt wird.

2. Verfahren nach Anspruch 1, wobei die Pumpwellenerzeugungsvorrichtung ein Mach-Zehnder-Interferometer (8) aufweist.

3. Verfahren nach Anspruch 1 oder 2, wobei die Pumpwellenerzeugungsvorrichtung (5) so angesteuert wird, dass Pumpwellen (q, r, s) mit einer fünften, sechsten und siebten Pumpwellenlänge erzeugt werden, die äquidistant zu den Pumpwellen mit der ersten, zweiten, dritten und vierten Pumpwellenlänge sind, so dass insgesamt für die Pumpwellen (q, r, s) mit der fünften, sechsten und siebten Pumpwellenlänge ein äquidistantes, und für die Pumpwellen (u, v, w) mit der ersten, zweiten und vierten Pumpwellenlänge ein nicht-äquidistantes Pumpkanalraster erzielt wird.

4. Verfahren nach Anspruch 3, wobei die Pumpwellen (q, r, s) mit der fünften, sechsten und siebten Pumpwellenlänge eine niedrigere Wellenlänge aufweisen, als die Pumpwellen (u, v, w) mit der ersten, zweiten und vierten Pumpwellenlänge.

5. Verfahren nach einem der vorhergehenden Ansprüche, wobei die Pumpwellen (v, w) mit der zweiten und vierten Pumpwellenlänge eine höhere Wellenlänge aufweisen, als die übrigen Pumpwellen (q, r, s, u), und wobei ein durch degenerierte Vierwellenmischung der Pumpwellen (v, w) mit der zweiten und vierten Pumpwellenlänge hervorgerufenes Mischprodukt eine Wellenlänge aufweist, die niedriger als die niedrigste Signalwellenlänge ist.

6. Pumpwellenerzeugungsvorrichtung (5) zur Erzeugung von Pumpwellen zur Raman-Verstärkung eines über einen Lichtwellenleiter (4) geführten Signals, welche mindestens eine Pumpquelle aufweist, und die so eingerichtet ist, dass sie Pumpwellen mit einer ersten, zweiten, dritten und vierten, zueinander äquidistanten Pumpwellenlänge erzeugen kann, mit einer Steuereinrichtung (5a), die so eingerichtet ist, daß sie jeweils bei der ersten, zweiten und vierten Pumpwellenlänge die Erzeugung einer Pumpwelle (u, v, w) veranlaßt,
**dadurch gekennzeichnet,**
**dass** die Steuereinrichtung (5a) so eingerichtet ist, dass bei der dritten Pumpwellenlänge keine Pumpwelle erzeugt wird, so dass insgesamt ein nicht-äquidistantes Pumpkanalraster erzielt wird.

7. Pumpwellenerzeugungsvorrichtung (5) nach Anspruch 6, bei welcher die Steuereinrichtung (5a) so eingerichtet ist, dass Pumpwellen (q, r, s) mit einer fünften, sechsten und siebten Pumpwellenlänge erzeugt werden, die äquidistant zu den Pumpwellen mit der ersten, zweiten, dritten und vierten Pumpwellenlänge sind, so dass insgesamt für die Pumpwellen (q, r, s) mit der fünften, sechsten und siebten Pumpwellenlänge ein äquidistantes, und für die Pumpwellen (u, v, w) mit der ersten, zweiten und vierten Pumpwellenlänge ein nicht-äquidistantes Pumpkanalraster erzielt wird.

8. Pumpwellenerzeugungsvorrichtung (5) nach Anspruch 7, bei welcher die Pumpwellen (q, r, s) mit der fünften, sechsten und siebten Pumpwellenlänge eine niedrigere Wellenlänge aufweisen, als die Pumpwellen (u, v, w) mit der ersten, zweiten und vierten Pumpwellenlänge.

9. Pumpwellenerzeugungsvorrichtung (5) nach einem der Ansprüche 6 bis 8, bei welcher die Pumpwellen (v, w) mit der zweiten und vierten Pumpwellenlänge eine höhere Wellenlänge aufweisen, als die übrigen Pumpwellen (q, r, s, u), und bei welcher ein durch degenerierte Vierwellenmischung der Pumpwellen (v, w) mit der zweiten und vierten Pumpwellenlänge hervorgerufenes Mischprodukt eine Wellenlänge aufweist, die niedriger als die niedrigste Signalwellenlänge ist.
